# EUROPEAN PATENT SPECIFICATION

(11) **EP 1 411 739 B1**
(45) Date of publication and mention of the grant of the patent: **05.07.2006**
(21) Application number: 02257151.7
(22) Date of filing: 15.10.2002
(51) Int. Cl.: H04Q 7/38

(54) **A method of selecting cells of base stations for soft-handover connection, and a network for mobile telecommunications**
Verfahren zur Auswahl von Zellen von Basisstationen für eine Soft-Handover-Verbindung, und ein Netzwerk für Mobilübertragungssysteme
Procédé de sélection de cellules de station de base pour la connexion pendant le soft-handover, et réseau pour communication mobile

(43) Date of publication of application: 21.04.2004
(73) Proprietor: LUCENT TECHNOLOGIES INC., Murray Hill, New Jersey 07974-0636 (US)
(72) Inventor: Cao, Qiang, Swindon, Wiltshire SN2 3XL (GB); Charriere, Patrick, Tetbury, Gloucestershire GL8 8Dr (GB); Lim, Seau Sian, Swindon, Wiltshire SN1 1HF (GB); Sapiano, Philip, Corsham, Wiltshire SN13 9AY (GB)
(74) Representative: Sarup, David Alexander

(56) References cited:
- WO-A-02/49381
- US-A1- 2002 119 780
- US-B1- 6 192 246

## Description

### Technical Field

The present invention relates to a method of selecting cells of base stations of a network for mobile telecommunications for soft-handover connection with a mobile user terminal so as to provide at a first network node multiple received representations of a data frame from the mobile user terminal within a predetermined period.

The present invention also relates to a network for mobile telecommunications comprising a selector operative to select cells of base stations for soft-handover connection with a mobile user terminal so as to provide at a first network node multiple received representations of a data frame from the mobile user terminal within a predetermined period.

### Background of the Invention

In code division multiple access (CDMA) systems, a mobile user terminal may be in a region in which soft-handover is possible. In a soft-handover scenario, signals from the mobile user terminal are received by more than one cell of a network.

In a soft-handover scenario, a mobile user terminal is normally given a set of neighbouring cells (known as a "monitor set") to monitor and report on the radio quality of each cell in the monitor set. Whenever a cell becomes a candidate for a soft-handover connection, the mobile user terminal (user equipment, UE) reports the radio quality of that cell to the network. The network then decides (based on the report) whether to make the cell part of the active set to each of which such a soft-handover connection is established.

The selection criteria for choosing whether a cell should be in soft-handover connection (i.e part of the active set) depends on the radio conditions (such as Common Pilot Channel quality) and radio resources (such as channelisation code, cell load). In a real system, other than radio-related resources and conditions, there are practrical constraints such the loading (i.e amount of traffic) being handled by an interface and bandwidth limits.

When there is more than one soft-handover connection, the best quality received signal from amongst those received is selected. Selecting the best signal of these received by the different cells (in the uplink direction), and from the different cells (in the downlink direction) is however only possible where the delay between signals via different cells is not too large. In a Universal Mobile Telecommunications System (UMTS) system, differences in loading of the cells and bandwidth limitations can result in different delays, reducing the possibility of always being able to select the best signal received via different cells.

United States patent US-B-6192246 and International (P.C.T.) Patent publication WO 02/49381 are referred to as background.

It is known from US-B-6192246 to provide a method of selecting cells of base stations of a network for mobile telecommunications for soft-handover connection with a mobile user terminal so as to provide at a first network node multiple received representations of a data frame from the mobile user terminal within a predetermined period.

### Summary of the Invention

The present invention is characterised over the disclosure of US-B-6192246 in that for each cell delay due to transfer of a representation of the received data frame across interface(s) between network nodes along a transfer path to said first network node is estimated by determining the contribution to the delay caused by each interface along the transfer path, cells being selected dependent upon the associated delays.

Preferably the method of selecting cells is for inclusion in a set of cells to be monitored as to radio quality for possible inclusion in an active set of cells in soft-handover connection.

Preferably cells are selected dependent on factors comprising the delay estimated, the received signal quality and the radio resources available.

Preferably each cell estimated as providing a representation of the received data frame that arrives at said first network node later than a predetermined time after the first of the representations of the received data frame is not selected.

Furthermore preferably said first network node is a radio network controller (RNC).

The present invention also provides a network for mobile telecommunications comprising a selector operative to select cells of base stations for soft-handover connection with a mobile user terminal so as to provide at a first network node multiple received representations of a data frame from the mobile user terminal within a predetermined period, and characterised by further comprising delay estimation means operative to estimate, for each cell, delay due to transfer of a representation of the received data frame across interface(s) between network nodes along a transfer path to said first network node by determining the contribution to the delay caused by each interface along the transfer path, the selector being operative to select cells dependent upon the associated delays.

Preferably the selector is operative to select cells for inclusion in an active set of cells in soft-handover connection.

Preferably the selector (12) is operative to select cells for inclusion in a set of cells to be monitored as to radio quality for possible inclusion in an active set of cells in soft-handover connection.

Preferably the selector (12) is operative to select cells dependent on factors comprising the delay estimated, the received signal quality and the radio resources available.

Preferably the selector (12) is operative such that each cell (18,22) providing a representation of the received data frame that arrives at said first network node (14) later than a predetermined time (W) after the first (F) of the representations of the received data frame is not selected.

Furthermore preferably said first network node (14) is a radio network controller (RNC), and the network comprises at least one further radio network controller (26), at least one radio network controller to radio network controller interface (8) and at least two radio network controller to base station interfaces (28,30).

Furthermore preferably said first network node (14) comprises the selector (12).

Selection of cells of base stations for soft-handover (also known as soft handoff) based on delay differences between a serving radio network controller (SRNC) and base stations (Node B).

In preferred embodiments, the criteria for selecting a cell to be used or monitored for soft-handover including consideration of received signal quality and radio resource usage (e.g. cell loading) are extended to include delay differences caused by interface(s) between the serving radio network controller (RNC) and the base stations. The difference in delay of the interface between Serving RNC and Node B is directly related to the difference in traffic load in the interfaces.

By considering the delay differences of the interfaces, preferred embodiments have the following advantages. Firstly, selection of the best received signal is possible. Secondly, unnecessary messaging is avoided from radio network controller to mobile user terminal and radio network controller to base station to establish soft-handover connections of no benefit. In other words, unnecessary signalling in establishing transport bearers that may not be usable in soft-handover is avoided. Thirdly, the size of the buffer required to store delayed traffic at the serving radio network controller is reduced. In other words, less buffering in the radio network controller (RNC) is required to store some frames whilst waiting for other frames from all of which to select. Fourthly, unnecessary reporting is avoided from the mobile user terminal regarding a cell in a monitor set with good radio quality but high delay on the associated interface(s).

Preferred embodiments provide a selection approach based not only on radio quality and resource criteria but also on physical interface constraints for including or excluding a cell from the active set or monitored set for soft-handover connection.

### Brief Description of the Drawings

A preferred embodiment of the present invention will now be described by way of example and with reference to the drawings, in which:
Figure 1 is a diagram illustrating a UMTS telecommunications network, and
Figure 2 is a diagram illustrating, an example of uplink message timing.

### Detailed Description

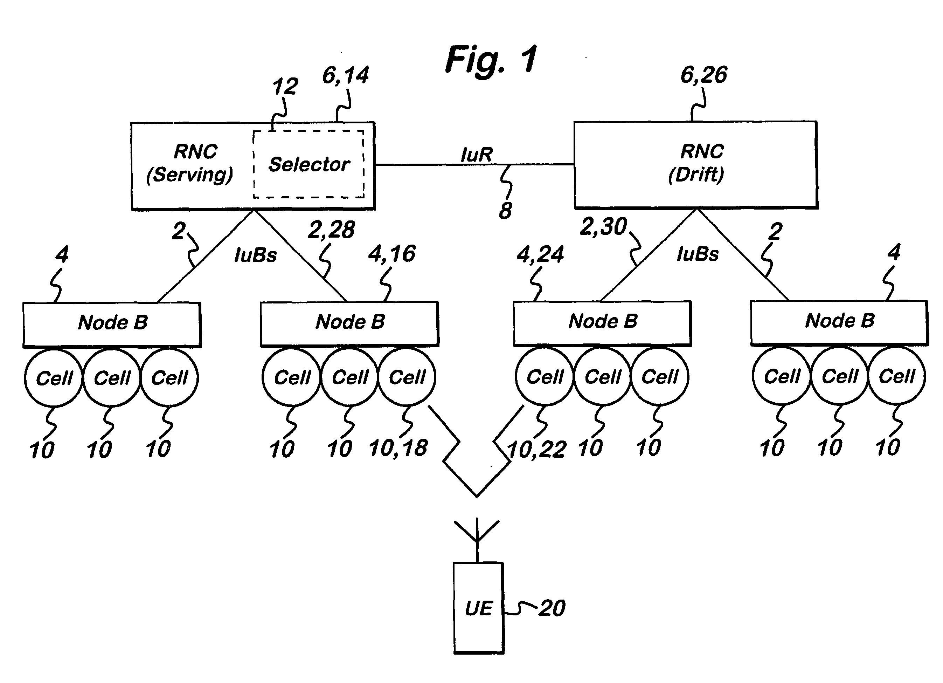

As shown in Figure 1 , there is an interface(denoted IuB interface) 2 between each base station (Node B in UMTS terminology) 4 and radio network controller (RNC) 6, and an interface (known as an IuR interface) 8 between two radio network controllers (RNC) 6. Each base station 4 has one or more cells 10 (i.e. areas of coverage). In UMTS a base station 4 has three cells 10 namely one hundred and twenty degree angular sectors around the base station 4.

As shown in Figure 1, the selection of which is the best received signal from the various cells in connection with a mobile user terminal 20 during soft-handover is done by a selector 12 which is part of a serving radio network controller 14 controlling a base station 16 having a cell 18 in connection with the mobile user terminal 20. As the mobile user terminal 20 is in a soft-handover phase, signals are also being received by a cell 22 of another base station 24 connected to a drift radio network controller 26.

A frame of data received by the base station 16 connected to the serving radio network controller 14 is sent via the respective IuB interface 28 to the serving radio network controller 14 . The same frame of data received by said another base station 24 is sent via IuB interface 30 to the drift radio network controller 26 then to the serving radio network controller 14 from the drift radio network controller 26 via the IuR interface 8 between the two radio network controllers 6,6,14,26. The serving radio network controller 14 then selects the best quality frame arriving within a selected time window (known as the "receive window") from each of the different cells 10 in the active set (i.e the set of cells in soft-handover connection, two cells 18,22 of which are shown in Figure 1 for simplicity. The receive timing window starts running when the first of these frames is received by the serving radio network controller 14. The quality of each frame is determined from the accuracy of receipt of cyclic redundancy check data or bit error rate (BER).

### Delay as a factor in Selection

The selector 12 takes into account factors such as received signal quality and radio resource usage (e.g. channelisation code usage, cell loading) when selecting which candidate cell is to be added to the active set, or which currently active cell is to be removed from the active set. The selector 12 in the serving radio network controller 14 additionally takes the total delay due to the interfaces 2,28,30,8 over which a frame received by a candidate cell must be transferred to reach the serving radio network controller into account when making a selection of which candidate cell is to be added to the active set, or which currently active cell is to be removed from the active set. A lower delay is, of course, preferred. The delay caused by an interface is dependent on the loading (i.e. amount of traffic being carried per unit time). Differences in delay in the interface(s) between the Serving radio network controller RNC and a base station are directly related to differences in the traffic load in the interfaces.

These delays are also taken in account in the determination of the monitored set, that is the list of cells to be monitored by the mobile user terminal (UE) for possible selection into the active set.

Take for example, the case where signals from the mobile user terminal 20 are received by two cells 18,22 and the two cells 18,22 are of different base stations (Node B) 16,24. The two different IuB interfaces 28,30 connecting the respective radio network controllers (RNC) 14,26 and base stations (Node Bs) 16,24, each have a different current traffic load and hence produce a differing delay in forwarding the received frame. If the delay is high on one of the IuB interfaces 28,30, the signal from the mobile user terminal 20 via that IuB interface will arrive outside the uplink received time-window (i.e time -window for reception of signal sent uplink) so not be available for selection by the selector 12.

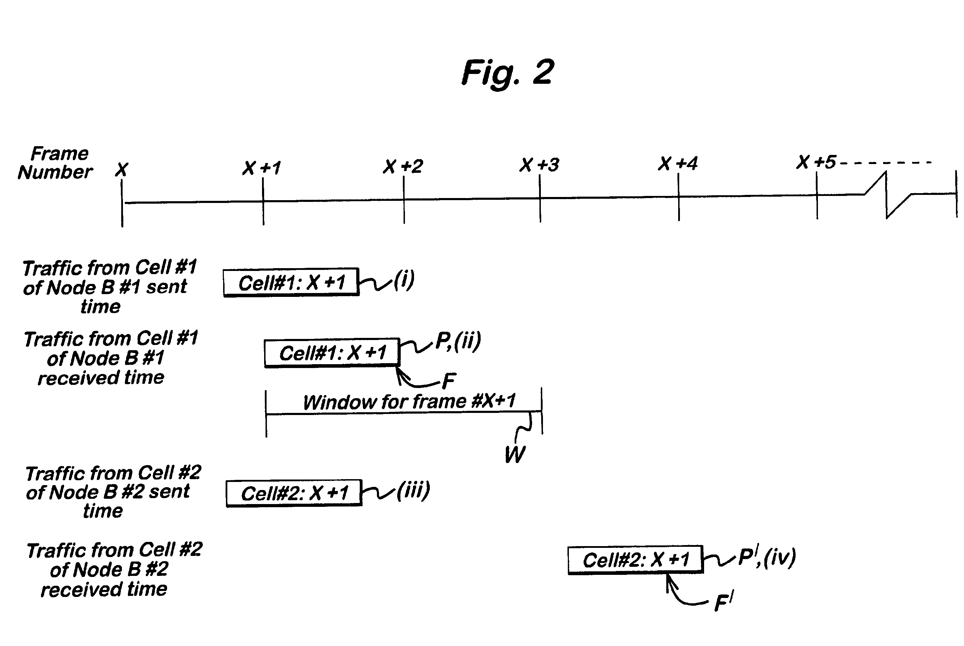

Figure 2 illustrates an example case of the serving radio network controller RNC 14 and cells 18,22 from two different base stations 16,24. With time being shown in terms of frame number x to x+5 from left to right, the following are shown diagrammatically in Figure 2:
(i) the time period over which a frame from cell 18 (Cell#1) of base station 16 is sent,
(ii) the time period P over which a frame F from cell 18 Cell# 1 of base station 16 is received,
(iiii) the time period over which a frame from cell 22 (Cell#2) of base station 22 is sent,
(iv) the time period P'over which a frame F'from cell 22 (Cell#2) of base station 22 is received.
The receive timing window W is also shown, where window W runs from the start of the time period P over which a frame from cell 18 (Cell#1) of base station 22 is received.

It will be seen that the frame (i.e traffic block) F', i.e. the data frame #(x+1) from the mobile user terminal 20 via a cell 22 (Cell#2) will not be selectable (i.e "contribute to soft handover gain") within the permitted receive time-window W. Increasing the size of the time-window W would mean that the Serving radio network controller RNC 14 has to buffer frame F (traffic block #(x+1) from the cell 18 (denoted Cell#1)) for longer.

### Delay Determination

The delays due to transfer between the two radio network controllers (RNC) 14,26 and between the respective radio network controller (RNC) 14,26 and the base stations 16,24 can be determined using UMTS-standardised uplink/ downlink node synchronisation procedures or an uplink/ downlink dedicated channel (DCH) synchronisation procedures. Specifically, these delays can be determined using either of the following two procedures over the IuB interface 28, or each of the IuR interface 8 and IuB interface 30, as appropriate. The procedures are based on the same principle, namely sending out a"pinging" signal to a destination node to find out whether the destination node is alive, the destination node sending an appropriate response. The "round trip" time from sending the pinging signal to receiving the associated response is then determined.

### One Procedure (DCH Synchronisation)

This procedure is initiated by the serving radio network controller (SRNC) 14 by sending a downlink synchronisation control frame towards a base station 16,24 in soft-handover connection. This control frame indicates a target connection frame number (CFN).

Upon reception of the downlink synchronisation control frame, the base station 16,24 immediately responds with an uplink synchronisation control frame indicating the time of arrival (ToA) for the downlink synchronisation control frame and the connection frame number (CFN) indicated in the received downlink synchronisation control frame.The uplink synchronisation control frame is always be sent as a response, even if the downlink synchronisation control frame is received by the base station within an expected arrival window.

### Other Procedure (Node Synchronisation)

This procedure is initiated by the serving radio network controller (SRNC) by sending a downlink node synchronisation control frame containing a parameter T1to a base station 16,24. Upon reception of a downlink node synchronisation control frame, the base station 16,24 responds with uplink node synchronisation control frame, including parameters T2 and T3, as well as the T1 parameter which was indicated in the initiating downlink node synchronisation control frame.

The T1, T2, T3 parameters are as follows:

T1 is the radio network controller (RNC) specific frame number (RFN) that indicates the time when the radio network controller (RNC) sends the downlink node synchronisation control frame for transmission, in particular by sending the frame from a service access point (SAP) to the transport layer in accordance with the layered communication protocol defined for UMTS systems.

T2 is a base station specific frame number (BFN) that indicates the time when the base station receives the corresponding downlink node synchronisation control frame through the service access point (SAP) from the transport layer.

T3 is a base station specific frame number (BFN) that indicates the time when the base station sends the uplink node synchronisation control frame through the service access point (SAP) to the transport layer.

## Claims

1. A method of selecting cells (18,22) of base stations (16,24) of a network for mobile telecommunications for soft-handover connection with a mobile user terminal (20) so as to provide at a first network node (14) multiple received representations of a data frame from the mobile user terminal (20) within a predetermined period,
**characterised in that** for each cell (18,22) delay due to transfer of a representation of the received data frame across interface(s) (28,30,8) between network nodes along a transfer path to said first network node (14) is estimated by determining the contribution to the delay caused by each interface along the transfer path,
cells (18,22) being selected dependent upon the associated delays.

2. A method of selecting cells according to claim 1, for inclusion in an active set of cells in soft-handover connection.

3. A method of selecting cells according to claim 1, for inclusion in a set of cells to be monitored as to radio quality for possible inclusion in an active set of cells in soft-handover connection.

4. A method of selecting cells according to any preceding claim, in which cells (18,22) are selected dependent on factors comprising the delay estimated, the received signal quality and the radio resources available.

5. A method of selecting cells according to any preceding claim, in which each cell (18,22) estimated as providing a representation of the received data frame that arrives at said first network node (14) later than a predetermined time (W) after the first (F) of the representations of the received data frame is not selected.

6. A network for mobile telecommunications comprising a selector (12) operative to select cells (18,22) of base stations (16,24) for soft-handover connection with a mobile user terminal (20) so as to provide at a first network node (14) multiple received representations of a data frame from the mobile user terminal (20) within a predetermined period,
and **characterised by** further comprising delay estimation means operative to estimate, for each cell (18,22), delay due to transfer of a representation of the received data frame across interface(s) (28,30,8)between network nodes along a transfer path to said first network node (14) by determining the contribution to the delay caused by each interface along the transfer path,
the selector (12) being operative to select cells dependent upon the associated delays.

7. A network for mobile telecommunications according to claim 6, in which the selector (12) is operative to select cells for inclusion in an active set of cells in soft-handover connection.

8. A network for mobile telecommunications according to claim 7, in which the selector (12) is operative to select cells for inclusion in a set of cells to be monitored as to radio quality for possible inclusion in an active set of cells in soft-handover connection.

9. A network for mobile telecommunications according to any of claims 6 to 8, in which the selector (12) is operative to select cells dependent on factors comprising the delay estimated, the received signal quality and the radio resources available.

10. A network for mobile telecommunications according to any of claims 6 to 9, in which the selector (12) is operative such that each cell (18,22) providing a representation of the received data frame that arrives at said first network node (14) later than a predetermined time (W) after the first (F) of the representations of the received data frame is not selected.

## Patentansprüche

1. Verfahren zur Auswahl von Zellen (18, 22) von Basisstationen (16, 24) eines Netzwerks für Mobiltelekommunikationen für Soft-Handover-Verbindung mit einem mobilen Benutzerendgerät (20), um an einem ersten Netzwerkknoten (14) mehrere empfangene Darstellungen eines Datenübertragungsblocks von dem mobilen Benutzerendgerät (20) innerhalb eines bestimmten Zeitraums bereitzustellen,
**dadurch gekennzeichnet, dass**
für jede Zelle (18, 22) die Verzögerung auf Grund der Übertragung einer Darstellung des empfangenen Datenübertragungsblocks über die Schnittstelle(n) (28, 30, 8) zwischen Netzwerkknoten entlang eines Übertragungswegs zu dem ersten Netzwerkknoten (14) geschätzt wird, indem der Beitrag zu der Verzögerung, die durch jede Schnittstelle entlang des Übertragungswegs verursacht wird, bestimmt wird,
wobei die Zellen (18, 22) abhängig von den dazugehörigen Verzögerungen ausgewählt werden.

2. Verfahren zur Auswahl von Zellen nach Anspruch 1 für die Aufnahme in eine aktive Gruppe von Zellen in einer Soft-Handover-Verbindung.

3. Verfahren zur Auswahl von Zellen nach Anspruch 1 für die Aufnahme in eine Gruppe von Zellen, die in Bezug auf Funkqualität für die mögliche Aufnahme in eine aktive Gruppe von Zellen in einer Soft-Handover-Verbindung überwacht werden sollen.

4. Verfahren zur Auswahl von Zellen nach einem beliebigen vorhergehenden Anspruch, in welchem die Zellen (18, 22) abhängig von Faktoren ausgewählt werden, welche die geschätzte Verzögerung, die Empfangssignal-Qualität und die verfügbaren Funk-Betriebsmittel umfassen.

5. Verfahren zur Auswahl von Zellen nach einem beliebigen vorhergehenden Anspruch, in welchem jede Zelle (18, 22), von der angenommen wird, dass sie eine Darstellung des empfangenen Datenübertragungsblocks bereitstellt, der an dem ersten Netzwerkknoten (14) später ankommt als eine vorgegebene Zeit (W) nach der ersten (F) der Darstellungen des empfangenen Datenübertragungsblocks, nicht ausgewählt wird.

6. Netzwerk für Mobiltelekommunikationen, umfassend einen Selektor (12), der zur Auswahl von Zellen (18, 22) von Basisstationen (16, 24) für Soft-Handover-Verbindung mit einem mobilen Benutzerendgerät (20) betriebsfähig ist, um an einem ersten Netzwerkknoten (14) mehrere empfangene Darstellungen eines Datenübertragungsblocks von dem mobilen Benutzerendgerät (20) innerhalb eines bestimmten Zeitraums bereitzustellen,
**gekennzeichnet durch**
und des Weiteren umfassend Verzögerungsschätzungseinrichtungen, die betriebsfähig sind, um für jede Zelle (18, 22) die Verzögerung auf Grund der Übertragung einer Darstellung des empfangenen Datenübertragungsblocks über die Schnittstelle(n) (28, 30, 8) zwischen Netzwerkknoten entlang eines Übertragungswegs zu dem ersten Netzwerkknoten (14) zu schätzen, indem der Beitrag zu der Verzögerung, die **durch** jede Schnittstelle entlang des Übertragungswegs verursacht wird, bestimmt wird,
wobei der Selektor (12) betriebsfähig ist, um die Zellen abhängig von den dazugehörigen Verzögerungen auszuwählen.

7. Netzwerk für Mobiltelekommunikationen nach Anspruch 6, in welchem der Selektor (12) betriebsfähig ist, um Zellen für die Aufnahme in eine aktive Gruppe von Zellen in einer Soft-Handover-Verbindung auszuwählen.

8. Netzwerk für Mobiltelekommunikationen nach Anspruch 7, in welchem der Selektor (12) betriebsfähig ist, um Zellen für die Aufnahme in eine Gruppe von Zellen auszuwählen, die in Bezug auf Funkqualität für die mögliche Aufnahme in eine aktive Gruppe von Zellen in einer Soft-Handover-Verbindung überwacht werden sollen.

9. Netzwerk für Mobiltelekommunikationen nach irgendeinem der Ansprüche 6 bis 8, in welchem der Selektor (12) betriebsfähig ist, um Zellen abhängig von Faktoren auszuwählen, welche die geschätzte Verzögerung, die Empfangssignal-Qualität und die verfügbaren Funk-Betriebsmittel umfassen.

10. Netzwerk für Mobiltelekommunikationen nach irgendeinem der Ansprüche 6 bis 9, in welchem der Selektor (12) so betriebsfähig ist, dass jede Zelle (18, 22), die eine Darstellung des empfangenen Datenübertragungsblocks bereitstellt, der an dem ersten Netzwerkknoten (14) später ankommt als eine vorgegebene Zeit (W) nach der ersten (F) der Darstellungen des empfangenen Datenübertragungsblocks, nicht ausgewählt wird.

## Revendications

1. Procédé de sélection de cellules (18,22) de stations de base (16,24) d'un réseau de télécommunications mobiles en vue d'une connexion à transfert intercellulaire doux avec un terminal utilisateur mobile (20) ainsi que de pourvoir à un premier noeud du réseau (14) de multiples représentations reçues d'une trame de données d'un terminal utilisateur mobile (20) endéans une période prédéterminée,
**caractérisé en ce que**
pour chaque cellule (18,22), un délai dû au transfert d'une représentation de la trame de données reçue au travers d'interface(s) (28,30,8) entre les noeuds du réseau le long d'un chemin de transfert audit premier noeud du réseau (14) est estimé en déterminant la contribution au délai causé par chaque interface le long du chemin de transfert.
Lesdites cellules (18,22) étant sélectionnées de manière dépendante des délais associés.

2. Procédé de sélection de cellules selon la revendication 1, pour inclusion dans un ensemble actif de cellules en connexion à transfert intercellulaire doux.

3. Procédé de sélection de cellules selon la revendication 1, pour inclusion dans un ensemble de cellules à surveiller quant à la qualité radio pour inclusion possible dans un ensemble actif de cellules en connexion à transfert intercellulaire doux.

4. Procédé de sélection de cellules selon l'une quelconque des revendications précédentes, dans lequel des cellules (18,22) sont sélectionnées de manière dépendante de facteurs comprenant le délais estimé, la qualité du signal reçu et les ressources radio disponibles.

5. Procédé de sélection de cellules selon l'une quelconque des revendications précédentes, dans lequel chaque cellule (18,22) estimée comme fournissant une représentation de la trame de données reçue qui arrive audit premier noeud du réseau (14) plus tard qu'à un moment prédéterminé (W) après la première (F) des représentations de la trame de données reçue, n'est pas sélectionnée.

6. Réseau de télécommunications mobiles comprenant un sélecteur (12) ayant la capacité opérationnelle de sélectionner des cellules (18,22) de stations de base (16,24) pour une connexion à transfert intercellulaire doux avec un terminal utilisateur mobile (20) de manière à fournir à un premier noeud de réseau (14) de multiples représentations d'une trame de données reçues dudit terminal utilisateur mobile (20) endéans une période prédéterminée,
**caractérisé en ce que**
et comprenant en plus des moyens d'estimation de délai ayant la capacité opérationnelle d'estimer, pour chaque cellule (18,22) le délai dû au transfert d'une représentation de la trame de données reçue au travers d'interface(s) (28,30,8) entre les noeuds du réseau le long d'un chemin de transfert audit premier noeud (14) du réseau est estimé en déterminant la contribution au délai causé par chaque interface le long du chemin de transfert,
ledit sélecteur (12) ayant la capacité opérationnelle de sélectionner des cellules de manière dépendante des délais associés.

7. Réseau de télécommunications mobiles selon la revendication 6, dans lequel ledit sélecteur (12) a la capacité opérationnelle de sélectionner des cellules pour inclusion dans un ensemble actif de cellules en connexion à transfert intercellulaire doux.

8. Réseau de télécommunications mobiles selon la revendication 7, dans lequel ledit sélecteur (12) a la capacité opérationnelle de sélectionner des cellules pour inclusion dans un ensemble de cellules à surveiller quant à la qualité radio pour inclusion possible dans un ensemble actif de cellules en connexion à transfert intercellulaire doux.

9. Réseau de des revendications 6 à 8, dans lequel ledit sélecteur (12) a la capacité opérationnelle de sélectionner des cellules de manière dépendante de facteurs comprenant le délais estimé, la qualité du signal reçu et les ressources radio disponibles.

10. Réseau de télécommunications mobiles selon l'une quelconque des revendications 6 à 9, dans lequel ledit sélecteur (12) a une capacité opérationnelle telle que chaque cellule (18,22) fournissant une représentation de la trame de données reçue qui arrive audit premier noeud du réseau (14) plus tard qu'à un moment prédéterminé (W) après la première (F) des représentations de la trame de données reçue, n'est pas sélectionnée.
